# EUROPEAN PATENT SPECIFICATION

(11) **EP 2 620 260 B1**
(45) Date of publication and mention of the grant of the patent: **12.11.2014**
(21) Application number: 11826444.9
(22) Date of filing: 19.09.2011
(51) Int. Cl.: B25J 5/00, B25J 18/02, F41H 11/16, B25J 19/02, B25J 9/06, B25J 11/00, F41H 9/10, F42D 5/04, B25J 9/10

(54) **REMOTE-CONTROLLED ROBOT FOR SPECIAL OPERATIONS**
FERNGESTEUERTER ROBOTER FÜR SPEZIELLE VORGÄNGE
ROBOT TÉLÉCOMMANDÉ POUR OPÉRATIONS SPÉCIALES

(30) Priority: 20.09.2010 ES 201030951 U
(43) Date of publication of application: 31.07.2013
(73) Proprietor: Proytecsa Security. S.L., 22500 Binefar (Huesca) (ES)
(72) Inventor: SALLEN ROSELLÓ, César, E-22500 Binefar (Huesca) (ES); TORRES PUEO, Roberto, E-22500 Binefar (Huesca) (ES)
(74) Representative: Ungria López, Javier
(86) International application number: PCT/ES2011/070648
(87) International publication number: WO 2012/038570

(56) References cited:
- EP-A1- 1 757 409
- EP-A1- 1 757 409
- WO-A1-2005/035204
- WO-A1-2005/035204
- DE-A1- 3 841 303
- US-A- 5 413 454
- US-A- 6 113 343
- US-A1- 2009 116 946

## Description

### OBJECT OF THE INVENTION.

The present invention, as expressed in the statement of the present specification, relates to a remote-controlled robot for special operations, being of the type of robots which are used to carry out high-risk operations, such as the handling of explosives, wherein said robot has a running gear, a telescopic arm ending in pincers and remote control and operation means such that the robot includes, a mast, which can rotate through 360° on the running gear to whose mast is integrally attached an arm, formed by a series of segments connected to each other and are actuated by a series of hydraulic cylinders and is provided with at least one camera and one deterrent weapon.

Thus, the object of the robot is the detection, identification, handling, and disarticulation of explosive artefacts, also acting as a surveillance vehicle, and since it is provided with at least one weapon, it can also act as a deterrent vehicle.

### FIELD OF THE INVENTION.

This specification describes a remote-controlled robot for special operations, which can be applied for the realization of different special protection operations, especially for the identification, detection, handling and elimination or disarticulation of explosive artefacts and charges.

Likewise, the remote-controlled robot can be applied for surveillance in strategic points, as well as in border areas, and it can even act as a deterrent mean by bearing at least one intimidating defensive weapon.

### BACKGROUND OF THE INVENTION.

Conventionally, when there is a need to handle explosive artefacts or carry out high-risk operations, especially when human lives are at risk, robots are normally used, which are run remotely by means of a control console.

This way, among the existing robots for the handling of explosive artefacts, we can mention the one comprised by an articulated arm, according to one single section and with no possibility of rotation according to a horizontal plane, that is to say, it can only move according to a vertical plane and is limited by its single articulated section.

Likewise, these types of robots have a series of control elements, such as vision cameras and proximity sensors.

On the other hand, we can consider several patent documents, such as the Spanish patent application ES 20030002384, published as ES 2229938 A1, presenting a self-propelled robol with means of displacement defined by two lateral wheel trains and two independent engines, each of which transmits movement to a lateral wheel train, so that all wheels have different diameters, being less robust than the robot object of this file.

Likewise, we can consider the patent document ES 2241490 A1, presenting a *self-propelled robot for the handling of explosive charges,* being the type of robot handled remotely by means of a remote control console, used to handle explosive charges and artefacts, having means of displacement defined by two adjustable lateral caterpillar running gears, presenting a scraper with adjustable length on its front side, as well as an articulated arm, whose first arm section is in the shape of a fork, activated by a pair of cylinders and ending in a pincer.

Likewise, we can consider other documents, such as US 6113343; JP 20040060195 and JP 200326875, so that document US 6113343 describes a robot adapted for being used in hostile environments, and especially for handling explosives, including a turret mechanism with a handling arm, with a first arm pivotable by 110° and a second arm, pivotable by 120°.

Document JP 20040060195 describes a machine comprised by a main body and a tensile device, provided at each side of the main body and at least one device actuated by a pressurized fluid to regulate the running gear's width.

Document JP 200326875 describes a vehicle with a means of displacement defined by lateral caterpillar running gears, in which the lateral caterpillar running gears are driven by the action of cylinders and are led by means of assembly and guidance crossbars.

### DESCRIPTION OF THE INVENTION.

The present specification describes a remote-controlled robot, for special operations, being of the type of robots which are used to carry out risky operations, such as the handling of explosives, and having a running gear, a telescopic arm ending in pincers and remote control and operation means, such that the robot includes on the running gear, a mast which can rotate through 360° and is provided with at least one thermal camera, and to whose mast is integrally attached an arm, formed by a series of segments, which are rotationally connected to each other and are actuated by hydraulic cylinders, the arm having at least one camera and at least one deterrent weapon.

Thus, the arm is constituted by a first and a second segment, connected through an intermediate body allowing their bending according to parallel planes. The second segment is connected to a third telescopic segment which, in turn, is connected to a fourth parallelogram-shaped segment; the fourth parallelogram-shaped segment is connected through an axle to a fifth segment, which, in turn, is connected to a sixth end segment bearing a pincer, and this sixth end segment bearing a pincer is actuated by an engine.

The fifth segment connected to the sixth end segment bearing a pincer maintains its relative position by actuating the fourth parallelogram-shaped segment, to which is connected.

Likewise, the fifth segment of the robot's arm bears a camera on its topside and respective deterrent weapons on its lateral sides, which can be used for an intimidating effect.

This way, the remote-controlled robot can be used in diverse special operations, thus being valid for the handling of explosives, and, likewise, usable as surveillance vehicle in certain areas, being able to act as a means of deterrence and intimidation by bearing at least one weapon.

As a supplement of the following description and with the purpose of facilitating a better comprehension of the features of the invention, the present specification is accompanied by a set of drawings, in whose figures, by way of illustration and not by way of limitation, the most characteristics features of the invention are represented:

### BRIEF DESCRIPTION OF THE FIGURES.

Figure 1. Shows an elevational lateral perspective of a practical embodiment of a remote-controlled robot with the arm bearing the pincer at the end in different working positions, exhibiting the wide variety of movements it can adopt.
Figure 2. Shows an elevational perspective of the remote-controlled robot with the arm bearing the pincer at the end, partially bent, with the pincer-bearing end according to two working positions in a vertical plane.
Figure 3. Shows a frontal view of the remote-controlled robot of the previous figure, exhibiting how the arm bearing the pincer at the end is bent according to two parallel planes.
Figure 4. Shows an elevational lateral perspective of the remote-controlled robot with the arm bearing the pincer at the end in a bent position.
Figure 5. Shows a plant view of the remote-controlled robot of the previous figure with the arm bearing the pincer at its end in a bent position.
Figure 6. Shows an elevational lateral view of a second embodiment of a remote-controlled robot with the arm bearing the pincer at its end bent, exhibiting one camera and one deterrent weapon in the vicinity of to the pincer.
Figure 7. Shows a plant view of the remote-controlled robot of the previous figure, with the arm bearing the pincer at its end in a bent position, exhibiting one camera and two deterrent weapons in the vicinity of the pincer.
Figure 8. Shows a back view of the remote-controlled robot of figure 6, showing the camera of the rotating mast.
Figure 9. Shows a second elevational lateral view of the remote-controlled robot of figure 6, with the arm bent, exhibiting one camera and one deterrent weapon in the vicinity of the pincer.

### DESCRIPTION OF A PREFERRED EMBODIMENT.

As it can be seen in the aforementioned figures, and according to the adopted numeration, we can observe how the remote-controlled robot is of the type of robots which are used to carry out special operations, such as the identification, detection, handling and elimination or disarticulation of explosive artefacts and charges, having a running gear, a telescopic arm ending in a pincer and remote control and operation means.

Thus, the robot 1 incorporates a 360° rotating mast 2, on the running gear 3, to whose mast 2, provided with at least one thermal camera, in integrally attached an arm 4, formed by a series of rotationally interconnected segments and actuated by a series of hydraulic cylinders, and said arm is provided with at least one camera and one deterrent weapon.

This way, the starting point of the arm is constituted by a first and a second segment 5 and 6, connected through an intermediate body 7 allowing their bending according to parallel planes. The second segment 6 is connected to a third telescopic segment 8 which, in turn, is connected to a fourth parallelogram-shaped segment 9; the fourth parallelogram-shaped segment 9 is connected through an axle to a fifth segment 10, which is, in turn, connected to a sixth end segment 11 bearing a pincer 12, and this sixth end segment 11 bearing a pincer 12 is actuated by an engine.

Thus, the fourth parallelogram-shaped segment 6 is constituted by a pair of parallel crossbars connected at their ends rotatably.

The sixth end segment 11 is provided with a rotation angle close to 180°, so that pincer 12 in which the arm ends has a rotating movement of 360° with regard to its longitudinal axis.

The sixth end segment 11 bearing pincer 12 maintains its relative position by actuating the fourth parallelogram-shaped segment 9 to which it is connected through the fifth segment 10, since, during the actuation of the fourth parallelogram-shaped segment 9, the same is deformed, maintaining the relative position of the sixth end segment 11 bearing the pincer 12.

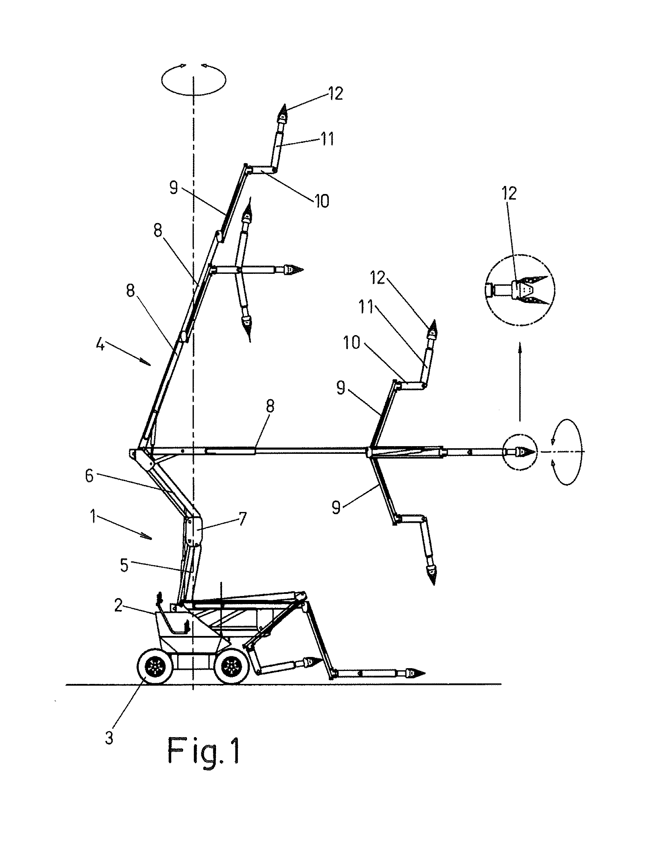

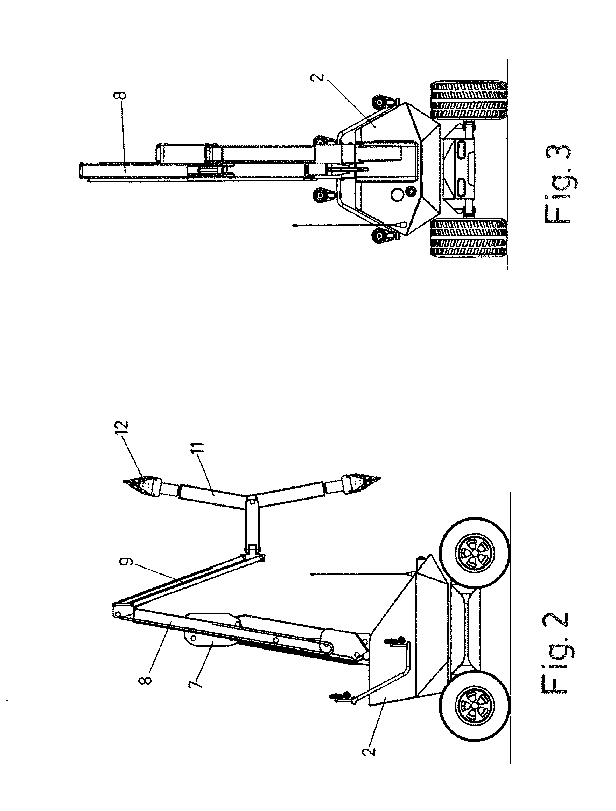

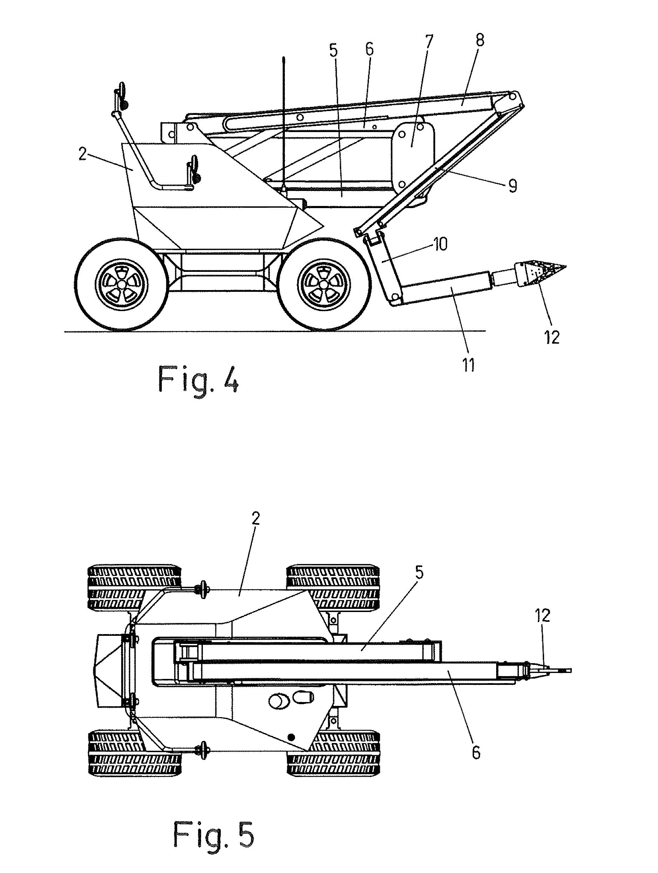

The structure described relative to arm 4 is exhibited in figures 1 to 5, showing its versatility with the different positions it can adopt.

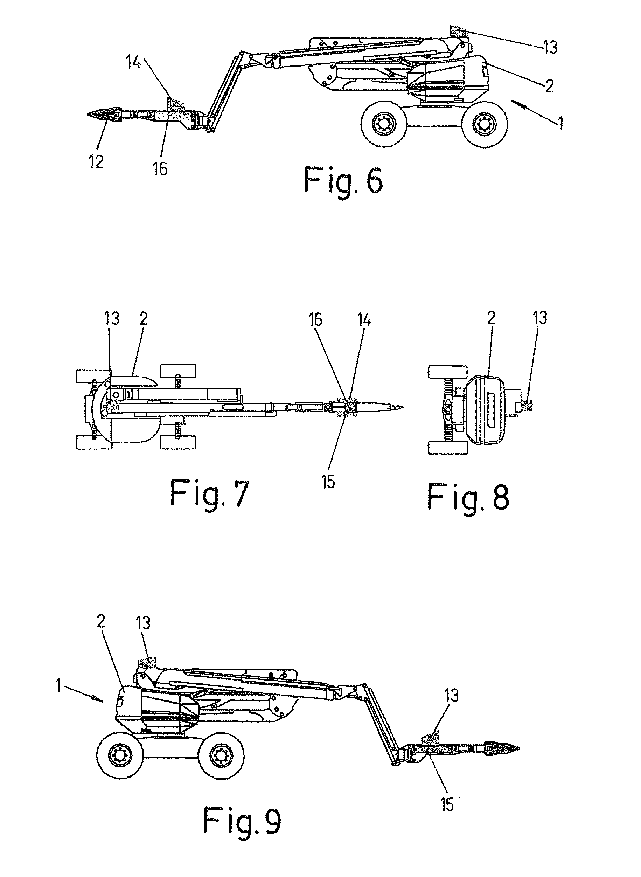

On the other hand, a robot 1 with different aesthetics is shown in figures 6 to 9, which maintains an arm 4 with identical features as those described, in which the positioning of the cameras and weapons borne by the robot 1 has been defined.

Thus, we can observe that the 360° rotating mast 2 has, at least, one thermal camera 13 and that the fifth segment 10 of arm 4 has, on its top side, an extra zoom camera 14 with a high-concentration focus, while the respective deterrent weapons 15 and 16, such as a shotgun and a grenade machine gun, are incorporated on both sides.

This way, the robot 1 may incorporate weapons, so it can be used in a deterrent or intimidating manner in its application as a surveillance robot in strategic areas, such as certain facilities, for example, oil wells or border areas.

## Claims

1. Remote-controlled robot for special operations, being of the type of robots which are used to carry out high-risk operations, such as the handling of explosives, which have a running gear, a telescopic arm ending in a pincer and remote control and operation means, the robot (1) further including, on the running gear (3), a mast (2), which can rotate through 360°, provided with at least one thermal camera (13), to whose mast (2) is integrally attached an arm (4), formed by a series of segments, which are rotationally connected to each other and are actuated by hydraulic cylinders, said arm (4) having at least one camera (14) and at least one deterrent weapon (15-16), so that the arm (4) is formed by a first and a second segment (5) and (6), connected through an intermediate body (7) allowing their bending according to parallel planes; the second segment (6) being connected to a third telescopic segment (8) which, in turn, is connected to a fourth parallelogram-shaped segment (9), and said fourth parallelogram-shaped segment (9) being connected through an axle to a fifth segment (10) which, in turn, is connected to a sixth end segment (11) bearing a pincer (12) and this sixth end segment (11) bearing a pincer (12) being actuated by an engine

2. Remote-controlled robot for special operations according to claim 1, wherein the fifth segment (10) connected to the sixth segment (11) bearing a pincer (12) maintains its relative position by actuating the fourth parallelogram-shaped segment (9) to which it is connected.

3. Remote-controlled robot for special operations according to claim 1, wherein the fifth segment (10) of arm (4) of the robot (1) bears a camera (14) on its topside and respective deterrent weapons (15 and 16) on its lateral sides.

## Patentansprüche

1. Ferngesteuerter Roboter für Spezialeinsätze, der zu dem Typ von Robotern gehört, die eingesetzt werden, um risikoreiche Einsätze, wie beispielsweise die Handhabung von Sprengstoffen, auszuführen, und die ein Fahrwerk, einen Teleskoparm, der in einem Greifer endet, sowie Fern-Steuerungs-und-Betätigungs-Einrichtungen aufweisen, wobei der Roboter (1) des Weiteren enthält:
auf dem Fahrwerk (3) einen Mast (2), der sich um 360° drehen kann und mit wenigstens einer Wärmebildkamera (13) versehen ist, wobei an dem Mast (2) integral ein Arm (4) angebracht ist, der aus einer Reihe von Segmenten besteht, die drehbar miteinander verbunden sind und von Hydraulikzylindern betätigt werden, der Arm (4) wenigstens eine Kamera (14) und wenigstens eine Abschreckwaffe (15, 16) aufweist, so dass der Arm (4) von einem ersten und einem zweiten Segment (5) und (6) gebildet wird, die über einen Zwischenkörper (7) miteinander verbunden sind, der zulässt, dass sie sich in parallelen Ebenen biegen, wobei das zweite Segment (6) mit einem dritten, teleskopischen Segment (8) verbunden ist, das seinerseits mit einem vierten, parallelogrammförmigen Segment (9) verbunden ist, und das vierte, parallelogrammförmige Segment (9) über eine Achse mit einem fünften Segment (10) verbunden ist, das seinerseits mit einem sechsten, abschließenden Segment (11) verbunden ist, das einen Greifer (12) trägt, und dieses sechste, abschließende Segment (11), das einen Greifer (12) trägt, von einem Motor betätigt wird.

2. Ferngesteuerter Roboter für Spezialeinsätze nach Anspruch 1, wobei das fünfte Segment (10), das mit dem sechsten Segment (11) verbunden ist, das einen Greifer (12) trägt, seine relative Position durch Betätigen des vierten, parallelogrammförmigen Segmentes (9) beibehält, mit dem es verbunden ist.

3. Ferngesteuerter Roboter für Spezialeinsätze nach Anspruch 1, wobei das fünfte Segment (10) des Arms (4) des Roboters (1) eine Kamera (14) an seiner Oberseite und jeweilige Abschreckwaffen (15 und 16) an seinen Seiten trägt.

## Revendications

1. Robot télécommandé pour des opérations spéciales, qui est du type de robots qui sont utilisés pour réaliser des opérations à haut risque, telles que la manipulation d'explosifs, qui ont un train de déplacement, un bras télescopique se terminant par une pince et des moyens de télécommande et de fonctionnement, le robot (1) comprenant en outre,
sur le train de déplacement (3), un mât (2) qui peut tourner sur 360° pourvu d'au moins une caméra thermique (13), sur lequel mât (2) est fixé d'un seul tenant un bras (4), formé par une série de segments, qui sont reliés de façon rotative l'un à l'autre et sont actionnés par des vérins hydrauliques, ledit bras (4) ayant au moins une caméra (14) et au moins une arme de dissuasion (15-16), de telle sorte que le bras (4) est formé par un premier et un deuxième segment (5) et (6), reliés par un corps intermédiaire (7) permettant leur flexion suivant des plans parallèles ; le deuxième segment (6) étant relié à un troisième segment télescopique (8) qui, à son tour, est relié à un quatrième segment en forme de parallélogramme (9), et ledit quatrième segment en forme de parallélogramme (9) étant relié par l'intermédiaire d'un axe à un cinquième segment (10) qui, à son tour, est relié au sixième segment d'extrémité (11) portant une pince (12) et ce sixième segment d'extrémité (11) portant une pince (12) étant actionné par un moteur.

2. Robot télécommandé pour des opérations spéciales selon la revendication 1, dans lequel le cinquième segment (10) relié au sixième segment (11) portant une pince (12) maintient sa position relative en actionnant le quatrième segment en forme de parallélogramme (9) auquel il est relié.

3. Robot télécommandé pour des opérations spéciales selon la revendication 1, dans lequel le cinquième segment (10) du bras (4) du robot (1) porte une caméra (14) sur son côté supérieur et des armes de dissuasion respectives (15 et 16) sur ses côtés latéraux.
